# EUROPÄISCHE PATENTANMELDUNG

(11) **EP 1 619 341 A1**
(43) Veröffentlichungstag der Anmeldung: **25.01.2006**
(21) Anmeldenummer: 04017537.4
(22) Anmeldetag: 23.07.2004
(51) Int. Cl.: E05F 15/16, H02K 7/116

(54) **Kraftfahrzeug-Stellantrieb mit einem gemeinsamen Lager für die Motorwelle und die Getriebewelle**

(71) Anmelder: SIEMENS AKTIENGESELLSCHAFT, 80333 München (DE)
(72) Erfinder: Viernekes, Gerald, 97437 Hassfurt (DE)

(57) **Zusammenfassung**

Die Erfindung betrifft einen Kraftfahrzeug-Stellantrieb, welcher eine Motoreinheit und eine Getriebeeinheit aufweist. Die Motoreinheit enthält ein Motorgehäuse und eine Motorwelle, die Getriebeeinheit ein Getriebegehäuse und eine Getriebewelle. Die Motorwelle und die Getriebewelle schließen in Axialrichtung aneinander an. Die Motorwelle und die Getriebewelle weisen ein gemeinsames Lager auf.

## Beschreibung

Die Erfindung betrifft einen Kraftfahrzeug-Stellantrieb mit einem gemeinsamen Lager für die Motorwelle und die Getriebewelle.

Kraftfahrzeug-Stellantriebe, beispielsweise Fensterheber-Antriebe oder Antriebe zur Betätigung des Schiebedaches, sind bereits bekannt. Sie weisen ein Motorgehäuse auf, in welchem ein Elektromotor angeordnet ist. Dieser hat einen Rotor, der mit einer Motorwelle und einem auf dieser befestigten, eine Vielzahl von Lamellen enthaltenden Läuferpaket versehen ist. An das Motorgehäuse ist in Axialrichtung der Motorwelle ein Getriebegehäuse angeflanscht. Im Getriebegehäuse ist ein Schneckenrad und eine als Schneckenwelle ausgebildete Getriebewelle vorgesehen. Zur Weitergabe des Drehmoments von der Motoreinheit an die Getriebeeinheit ist eine Verbindung vorgesehen, die die Motorwelle mit der Getriebewelle formschlüssig verbindet. Zur Gewährleistung der Arbeitsweise ist bei bekannten Stellantrieben sowohl die Motorwelle als auch die Getriebewelle jeweils zweifach gelagert, so dass insgesamt vier Wellenlager vorgesehen sind.

Probleme einer derartigen Lagerung der Welle resultieren daraus, dass aufgrund von Fertigungsungenauigkeiten in der Praxis stets ein Koaxialitätsfehler auftritt.

Die Aufgabe der Erfindung besteht darin, die vorgenannten Probleme zu beseitigen.

Diese Aufgabe wird durch einen Kraftfahrzeug-Stellantrieb mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass ein Auftreten von Fluchtungsfehlern bezüglich der Motorwelle und der Getriebewelle, die in Axialrichtung aneinander anschließen, vermieden wird. Weiterhin ist die Anzahl der zur Realisierung eines Kraftfahrzeug-Stellantriebes benötigten Bauteile reduziert, da ein Kraftfahrzeug-Stellantrieb gemäß der Erfindung insgesamt nur drei Lager benötigt. Ferner ist im Vergleich zum Stand der Technik der Montageaufwand verringert.

Weitere vorteilhafte Eigenschaften der Erfindung ergeben sich aus deren nachfolgender Erläuterung anhand der Figuren. Es zeigt
- Figur 1: eine Längsschnittdarstellung eines Teils eines Kraftfahrzeug-Stellantriebes gemäß der Erfindung,
- Figur 2: eine Skizze einer alternativen Ausführungsform, bei welcher das Lager zylinderförmig ausgebildet ist und
- Figur 3: eine Skizze einer weiteren Ausführungsform, bei welcher das Lager eine kalottenförmige Kontur hat

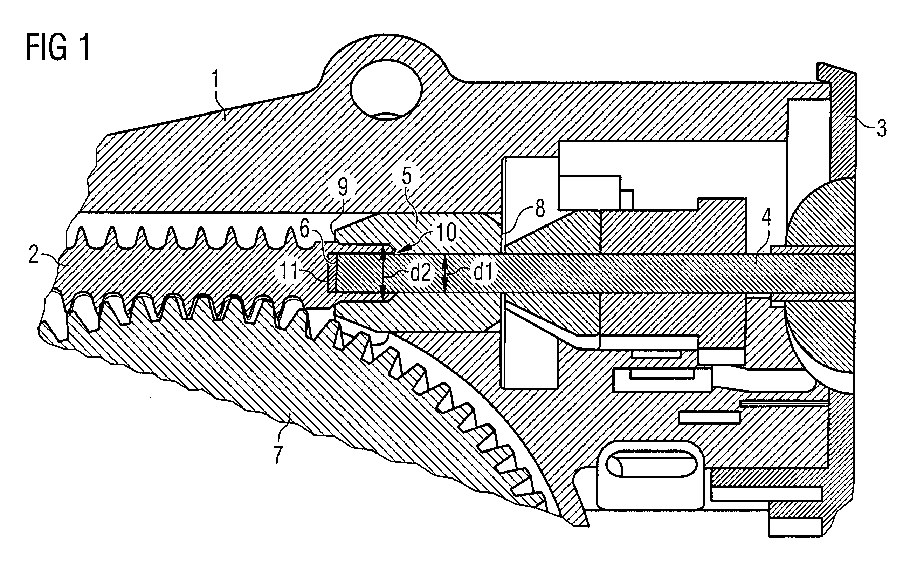

Die Figur 1 zeigt eine Längsschnittdarstellung eines Teils eines Kraftfahrzeugs-Stellantriebes gemäß der Erfindung. Der dargestellte Kraftfahrzeug-Stellantrieb weist ein Getriebegehäuse 1 und ein an dieses angeflanschtes Motorgehäuse 3 auf. Im Getriebegehäuse 1 sind unter anderem ein Schneckenrad 7 und eine als Schneckenwelle realisierte Getriebewelle 2 vorgesehen. Im Motorgehäuse 3 ist eine Motorwelle 4 vorgesehen, die in Axialrichtung in das Getriebegehäuse 1 hineinragt.

Das linksseitige Ende der Motorwelle 4 und das rechtsseitige Ende der Getriebewelle 2 sind in einem gemeinsamen Lager 5 gelagert. Dieses ist im Getriebegehäuse 1 positioniert.

Beim Lager 5 handelt es sich um ein im Wesentlichen ringförmiges Lager. Dessen Innendurchmesser d1 ist in dem dem Motorgehäuse 3 zugewandten Endbereich 8 des Lagers 5, an dem die Motorwelle 4 in das Lager 5 eintritt, kleiner als der Innendurchmesser d2, den das Lager 5 in seinem vom Motorgehäuse 3 abgewandten Endbereich aufweist.

Der Endbereich der Getriebewelle 2 weist eine zylinderförmige Öffnung 10 auf, in welche der Endbereich der Motorwelle 4 in Axialrichtung hineinragt. Zwischen dem Endbereich der Motorwelle 4 und dem Boden 11 der zylinderförmigen Öffnung 10 der Getriebewelle 2 ist ein Axialspielausgleichselement 6 vorgesehen, das eventuelle Fertigungsungenauigkeiten von Getriebewelle 2 und/oder Motorwelle 4 ausgleicht. Bei diesem Axialspielausgleichselement handelt es sich beispielsweise um eine Feder oder um ein Kunststoffteil, beispielsweise ein Elastomer.

Die Weitergabe des Drehmoments von der Motorwelle 4 auf die Getriebewelle 2 erfolgt durch eine nicht dargestellte Verbindung, die die Motorwelle formschlüssig mit der Getriebewelle verbindet.

Ein Vorteil des vorstehend beschriebenen Kraftfahrzeug-Stellantriebs besteht darin, dass aufgrund der Lagerung der in Axialrichtung aneinander anschließenden, in einer Flucht liegenden Endbereiche von Motorwelle und Getriebewelle in einem gemeinsamen Lager 5 insgesamt nur drei Lager zur Lagerung der beiden vorgenannten Wellen benötigt werden. Dabei sind die beiden nicht aus der Figur ersichtlichen Lager im jeweils nicht dargestellten anderen Endbereich der jeweiligen Welle vorgesehen. Dies entspricht insgesamt einer Einsparung des Bauteileaufwandes. Ein weiterer Vorteil der Erfindung besteht in einem im Vergleich zu bekannten Kraftfahrzeug-Stellantrieben reduzierten Bauteileaufwand, wodurch die Kosten eines Kraftfahrzeug-Stellantriebes verringert werden. Ferner werden auch Fluchtungsfehler vermieden, da die aneinander angrenzenden Endbereiche der beiden Wellen in einem gemeinsamen Lager gehalten sind, wobei in Radialrichtung keinerlei Spiel besteht.

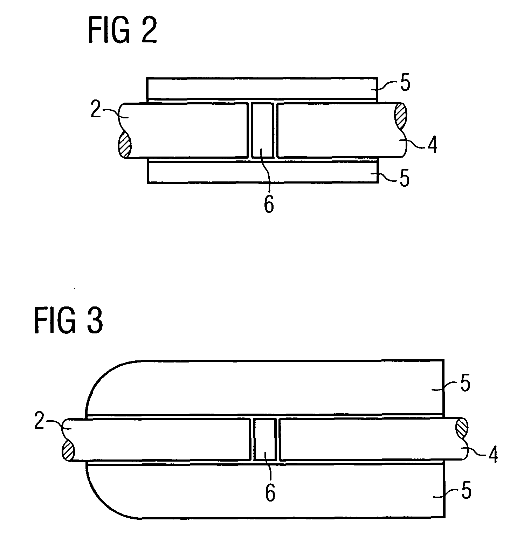

Alternativ zu der oben beschriebenen Ausführungsform, bei welcher der Innendurchmesser des Lagers in seinem dem Motorgehäuse zugewandten Endbereich kleiner ist als der Innendurchmesser des Lagers in seinem vom Motorgehäuse abgewandten Endbereich, ist gemäß einer weiteren Ausführungsform der Erfindung das Lager zylinderförmig ausgebildet, wie es in der Figur 2 schematisch veranschaulicht ist.

Die Figur 3 zeigt eine Skizze einer weiteren alternativen Ausführungsform, bei welcher das Lager eine kalottenförmige Kontur hat.

## Patentansprüche

1. Kraftfahrzeug-Stellantrieb, mit einer Motoreinheit und einer Getriebeeinheit, wobei die Motoreinheit ein Motorgehäuse und eine Motorwelle aufweist, die Getriebeeinheit ein Getriebegehäuse und eine Getriebewelle aufweist und die Motorwelle und die Getriebewelle in Axialrichtung aneinander anschließen, **dadurch gekennzeichnet, dass** die Motorwelle (4) und die Getriebewelle (2) ein gemeinsames Lager (5) aufweisen.

2. Kraftfahrzeug-Stellantrieb nach Anspruch 1, **dadurch gekennzeichnet, dass** das gemeinsame Lager (5) im Getriebegehäuse (1) positioniert ist.

3. Kraftfahrzeug-Stellantrieb nach Anspruch 1 oder 2, **dadurch gekennzeichnet, dass** der Endbereich der Getriebewelle (2) mit einer Öffnung (10) versehen ist, in welche der Endbereich der Motorwelle (4) eingesetzt ist.

4. Kraftfahrzeug-Stellantrieb nach Anspruch 3, **dadurch gekennzeichnet, dass** zwischen dem Boden (11) der Öffnung (10) und dem Endbereich der Motorwelle (4) ein Axialspielausgleichselement (6) vorgesehen ist.

5. Kraftfahrzeug-Stellantrieb nach einem der vorhergehenden Ansprüche, **dadurch gekennzeichnet, dass** der Innendurchmesser (d1) des Lagers (5) in seinem dem Motorgehäuse (3) zugewandten Endbereich (8) kleiner ist als der Innendurchmesser (d2) des Lagers (5) in seinem vom Motorgehäuse (3) abgewandten Endbereich (9).

6. Kraftfahrzeug-Stellantrieb nach einem der Ansprüche 1 - 4, **dadurch gekennzeichnet, dass** das Lager zylinderförmig ausgebildet ist.

7. Kraftfahrzeug-Stellantrieb nach einem der Ansprüche 1 - 4, **dadurch gekennzeichnet, dass** das Lager eine kalottenförmige Kontur hat.
